Europäisches Patentamt

European Patent Office

Office européen des brevets

(19)

(11) Veröffentlichungsnummer: **0 062 685**
**B1**

(12) **EUROPÄISCHE PATENTSCHRIFT**

(45) Veröffentlichungstag der Patentschrift: **03.04.85**

(21) Anmeldenummer: **81102801.8**

(22) Anmeldetag: **11.04.81**

(51) Int. Cl.⁴: **B 21 D 22/16**

(54) **Verfahren zum Betreiben einer numerisch kontrollierten und gesteuerten Drückmaschine sowie Drückmaschine zur Durchführung dieses Verfahrens.**

(43) Veröffentlichungstag der Anmeldung:
**20.10.82 Patentblatt 82/42**

(45) Bekanntmachung des Hinweises auf die Patenterteilung:
**03.04.85 Patentblatt 85/14**

(84) Benannte Vertragsstaaten:
**AT BE CH DE FR GB IT LI NL SE**

(56) Entgegenhaltungen:
**CH-A- 494 424**
**DE-A-1 652 631**
**DE-A-2 005 007**
**DE-A-2 624 733**
**FR-A-2 236 620**
**FR-A-2 393 359**
**US-A-3 496 747**
**US-A-3 911 347**

**MASCHINENMARKT, Band 87, (1981) 10 Seite
144 Würzburg, DE. "CNC-gesteuertes Drücken
oder Playback-Verfahren"**

(73) Patentinhaber: **Leifeld & Co. Werkzeug- und
Maschinenfabrik
Beckumer Strasse 92-98
D-4730 Ahlen (DE)**

(72) Erfinder: **Leifeld, Theodor F.
Westfalendamm 44
D-4730 Ahlen/Westf. (DE)**

(74) Vertreter: **Schulze Horn, Stefan, Dipl.-Ing. et al
Goldstrasse 36
D-4400 Münster (DE)**

**Beschreibung**

Die Erfindung betrifft ein Verfahren zum Betreiben einer numerisch kontrollierten und gesteuerten Drückmaschine mit mindestens einer von einem Support getragenen Drückrolle, die quer zur Supportbahn bewegbar ist, wobei ein oder mehrere aufeinanderfolgende Rollenüberläufe der Drückrolle von einem Drücker gesteuert vorgenommen werden und der Weg der Drückrolle (Istwerte) gemessen wird, wobei eine Referenzkurve für einen automatischen Wiederholbetrieb gespeichert wird und bei automatischer Bearbeitung gleicher Werkstücke über einen Rechner mit Daten-Speicher die Drückrolle mit Hilfe der Referenzkurve gesteuert wird, sowie eine Drückmaschine mit einem rotierenden Drückfutter und mindestens einer Drückrolle, mit einem Kreuzsupport bei dem eine Bewegung der Drückrolle in Richtung quer zur Bewegungsbahn des Support vorgenommen wird, Lageistwertgebern zur Bestimmung der Position der Drückrolle im Verhältnis zum Drückfutter und mit einer numerischen Steuerung zur Steuerung der Drückrollenbewegung aufgrund gespeicherter Daten mit Vorrichtungen zur automatischen Wiedergabe (Playback) einer gespeicherten Referenzkurve.

Es sind bereits Drückmaschinen bekannt, die als NC- oder CNC-gesteuert bezeichnet werden. Diese Drückmaschinen werden entweder über einen Lochstreifen, ein Magnetband oder andere Datenträger gesteuert. Nachteilig ist bei diesen bekannten Maschinen aber, daß das Programm der Steuerung nur von erfahrenen Fachkräften erstellt werden kann und daß weiterhin die komplizierten Formen moderner technischer Werkstücke, insbesondere bei einer Reihe von Überläufen, nicht so gut und optimal hergestellt werden können, wie dies einem erfahrenen Handdrücker gelingt.

Aus der Zeitschrift "Maschinenmarkt, Würzburg 87 (1981), S. 144", aus der das eingangs genannte Verfahren bzw. die erwähnte Drückmaschine hervorgehen, ist es weiterhin bereits bekannt, das Programm für die numerische Steuerung durch eine Speicherung von Daten zu erhalten, welche in einem manuell durchgeführten Drückvorgang erhalten werden. Diese playbackgesteuertes Drücken genannte Fertigungsart gestattet es dem gelernten Metalldrücker, sein empirisch gewonnenes Wissen über das Umformvermögen unterschiedlichster Werkstoffe beim Fertigen eines Drückteiles auszunutzen. Das einmal gewonnene optimale Umformergebnis bleibt über die Speicherung der Umformbewegungen und Geschwindigkeiten registriert und kann beliebig oft zum Steuern der Maschine wieder abgerufen werden.

Nachteilig hat sich bei diesem bekannten playbackgesteuerten Drückverfahren aber herausgestellt, daß entgegen dem Verständnis des Fachmannes eine Speicherung eines einmal gefundenen optimalen Überlaufs nicht ausreicht, um ein Programm zu erstellen, welches die optimalen Verhältnisse reproduziert. Für den Fachmann überraschend ist vielmehr im normalen Playbackverfahren das Ergebnis der folgenden, automatisch gesteuerten Überläufe mit dem Ergebnis der Formung durch den Handdrücker nicht vergleichbar. Insbesondere hat sich als nachteilig herausgestellt, daß die automatische bzw. "blinde" Reproduzierung gewonnener Daten nicht nur auch schlechtere Umformergebnisse ergibt, sondern sogar zur Zerstörung der Maschine und des Futters führen kann.

Aus der CH—A—494 424 ist weiterhin eine Lochband-Steuereinrichtung zur Steuerung von Werkzeugmaschinen bekannt, welche einen Regelkreis für Längen- bzw. Zeit dimensionen mit mindestens einem chemischen bzw. physikalischen Daten erfassenden Steuerglied im Wirkverbindung aufweist. Nachteilig ist bei diesem Korrekturverfahren, daß eine Korrektur nicht durch das Programm selbst, sondern durch nachträgliche Berücksichtigung von Korrekturfaktoren erfolgen muß, die jeweils auf den Informationsträger neu aufgelesen werden müssen. Die Korrekturfaktoren müssen ermittelt werden. Es hat sich gezeigt, daß diese Ermittlung entweder nur unvollständig ist oder daß sie eine dynamische Zustandsänderung nicht berücksichtigt.

Weiterhin ist aus der US—A—3 911 347 bekannt, für Werkzeugmaschinen eine sogenannte "adaptive" Steuerung vorzusehen. Diese Steuerung mißt zum Beispiel die auf ein Werkzeug einwirkenden Kräfte und korrigiert während der Bearbeitung entweder Abweichungen oder Zustandswerte. Die von der Kontrolle erhaltenen Signale werden dabei zur Herstellung eines neuen Programmes bzw. zur Korrektur des vorhandenen verwertet. Damit können zwar dynamische Fehler berücksichtigt werden, der direkt ablaufende Verformungsvorgang kann aber nachteilig nicht ausreichend beeinflußt werden. Die Korrekturwerte führen demnach nicht unmittelbar zu einer Zustandsänderung, sondern gehen als Abweichungsparameter in das Program ein. Damit ist eine rasche Anpassung der Steuerungswerte nicht möglich.

Es ist Aufgabe der Erfindung, die Nachteile dieses Standes der Technik zu vermeiden und ein Verfahren und eine Drückmaschine zur Durchführung dieses Verfahrens zu schaffen, bei welchem eine einmal erreichte optimale Umformung tatsächlich reproduziert werden kann, bei denen eine Zerstörung des Futters und der Maschine während der numerisch gesteuerten Verformungen ausgeschlossen ist und die insbesondere auch bei geringfügignen Änderungen in den Ausgangsbedingungen, z.B. bei Toleranzen und Temperatureinflüssen in der Werkstoffstruktur ein einmal erreichtes optimales Ergebnis wiederholbar bleibt.

Der erfahrene Handdrücker kann neben der Beurteilung des während des Rollenüberlaufes erzeugten Geräusches auch das Werkstoffverhalten und die zur Umformung aufzuwendende Kraft zur Beurteilung seiner Arbeit hinzuziehen. Es ist demgemäß weiterhin Aufgabe der Erfindung, eine Reproduzierbarkeit der Daten während eines als optimal erkannten Verformungsvorganges so herzustellen, daß die Qualität der nachfolgenden Umformvorgänge, die automatisch gesteuert sind, der Qualität des von dem Handdrücker vorgenommenen Umformvorganges mit seinen Kontrollmöglichkeiten entspricht. Die Lösung der erfindungsgemässen Aufgabe soll dabei auf einer wirtschaftlich arbeitenden Maschine auch bei geringen Taktzeiten vollautomatisch möglich sein.

Für den Fachmann überraschend hat sich gezeigt, daß für einen Handdrücker nur durch eine Wegsteuerung kein optimales und wirklich geschicktes Umformen erreichbar ist. Es ist so nicht möglich, daß der Handdrücker den Spalt zwischen Drückrolle und Futter einhalten kann. Eine solche Möglichkeit ist zwar theoretisch gegeben und optimal, die Geschicklichkeit des Handdrückers kann dabei aber nicht voll ausgenutzt werden, wie dies zur optimalen Programmierung der Rechner- und Speichereinheit notwendig ist. Wenn z.B. die Dicke der verwendeten Platine entsprechend den Steuerkurven zu groß ist, ist der gefahrene Spalt zu eng und es entstehen Riefen. Der Spalt wird zu weit und das Werkstück ist nicht genügend maßhaltig, wenn z.B. die Platine in der Dicke zu gering ist. Ein brauchbares Ergebnis wird nur erreicht durch eine Kraftmessung bzw. Regulierung des Druckes in den für die Bewegungen zuständigen Hydrauliksystemen.

Die vorstehend genannte Aufgabe wird bei dem eingangs genannten Verfahren erfindungsgemäß derart gelöst, daß die Lageistwerte und die zugehörigen Druck- bzw. Kraftwerte zur Bestimmung von Lagesollwerten gemessen werden, die ihrerseits für den automatischen Wiederholbetrieb in Form der Referenzkurve gespeichert werden, wobei diese Messungen während eines oder mehrerer durch den Drücker kraftgesteuerten Überlaufs oder Überläufe erfolgt und daß zusätzlich eine die Drückrollenbewegung begrenzende Sicherheitskurve gespiechert wird, die der Kontur des verwendeten Drückfutters entspricht. Entgegen dem bisherigen Fachwissen werden also nicht die Istwerte des optimalen Überlaufs als Referenzwerte verwendet, sondern die Sollwerte verwendet. Diese Lösung beruht darauf, daß erfindungsgemäß erkannt wurde, daß eine Maschine bei Kenntnis einmaliger Istwerte diese bedingt durch die Regelabweichung nicht wieder erreicht, sondern daß maschinenspezifisch eine Korrektur angewendet werden muß und die so erhaltenen Werte dann als Sollwerte (unterschiedlich von den Istwerten) verwendet werden.

Um eine Zerstörung des Futters oder der Maschine bzw. der Drückrollen sicher zu vermeiden, wird weiterhin erfindungsgemäß vorteilhaft eine die Drückrollenbewegung begrenzende Sicherheitskurve gespeichert, die der Kontur des verwendeten Drückfutters entspricht und die verhindert, daß die Drückrolle etwa direkt gegen das Futter arbeitet.

Im einzelnen kann vorteilhaft die Bewegung der Drückrolle gegenüber dem Support hydraulisch erfolgen und Istwertgeber zur Lagefeststellung des Supports und der Drückrolle werden eingesetzt, deren Werte in Abhängigkeit von der Lage der Drückrolle gemessen und gespeichert werden.

Um die optimale Einstellung während des manuell gesteuerten Umformvorganges wiederholbar zu machen, kann vorteilhaft während des manuell gesteuerten Überlaufes der Druck im Hydrauliksystem bestimmt werden, welcher für die Bewegung der Drückrolle in Richtung quer zur Supportbahn über eine Kolben-Zylinder-Einheit wirksam ist, wobei die entspreeenden Meßwerte gespeichert werden und während der numerisch gesteuerten Überläufe zur Bestimmung der Sollwerte dienen.

Vorteilhaft können weiterhin die Druckistwerte mit einem Drucksollwert verglichen werden, der einen nicht zu überschreitenden Sicherheitswert darstellt, so daß verhindert wird, daß durch Aufwendungen eines zu hohen Drucks zur Erreichung einer bestimmten Sollwertposition eine Beschädigung der Maschine auftreten kann.

Um die nötigen Informationen in der benötigten Geschwindigkeit speichern und wieder abgeben zu können und insbesondere die Menge der Informationen speichern zu können, werden vorteilhaft die Messung und Speicherung der Ist und Sollwerte und die Steuerung digital vorgenommen.

Maschinenmäßig wird die erfindungsgemäße Aufgabe bei der eingangs genannten Drückmaschine erfindungsgemäß derart gelöst, daß Mittel vorhanden sind zur Messung der Lageistwerte und der dazugehörigen Druck- bzw. Kraftwerte sowie mit Vorrichtungen zum Bestimmen der daraus abgeleiteten Lagesollwerte und zu deren Speicherung in Form einer Referenzkurve und einer die Drückrollenbewegung begrenzenden Sicherheitskurve, die der Kontur des verwendeten Drückfutters entspricht.

Vorteilhaft weist die erfindungsgemäße Drückmaschine einen die Steuerung und Datenspeicherung mittels digitaler Signale vornehmenden Rechner auf und besitzt mindestens einen im Hydrauliksystem angeordneten Druckistwertfühler und einen von dem Rechner gesteuerten Druckbegrenzer im Hydrauliksystem für die Bewegung der Druckrolle quer zur Supportbahn. Zur Bewegung des Supportes kann anstelle eines Hydraulikzylinders eine Spindel vorhanden sein.

Im folgenden wird ein Ausführungsbeispiel der Erfindung anhand einer Zeichnung näher beschrieben, die schematisch eine Drückmaschine zum Fertigen von Felgenschüsseln darstellt.

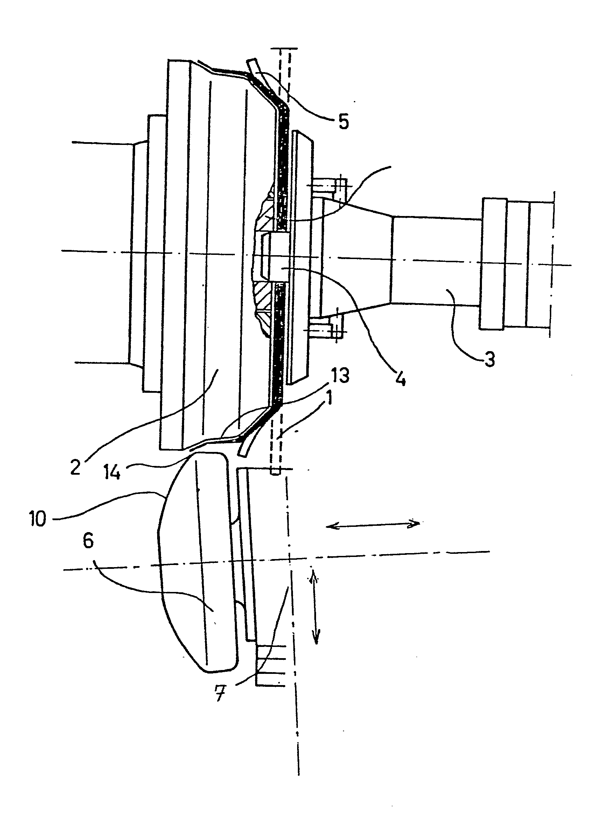

Gemäß der Zeichnung wird eine Ronde 1 von einem Reitstock 3 mit einem mittleren Dorn 4 gegen das Futter 2 gespannt und in einem oder mehreren Überläufen über eine Zwischenform 5 zu dem Endprodukt 13 geformt. Der Support 7 trägt eine Drückrolle 6 mit einer Rundung 10 und der Drückschulter 14. Der Support 7 kann über eine Spindel oder über eine hydraulische Kolben-Zylinder-Einheit verfahren werden, wobei die Drückrolle 6 gegenüber dem Support in einer Richtung senkrecht zur Supportbahn über eine nicht gezeigte hydraulische Kolben-Zylinder-Einheit bewegt wird. Hinsichtlich der Supportbewegung und der Bewegung der Drückrolle in der beschriebenen Bahn sind Lageistwertgeber vorhanden, deren Signale digital aufgeschlüsselt und an eine Speicher- bzw. Rechnereinheit gegeben werden.

Neben den Lagewerten werden noch die Werte in dem Hydrauliksystem für die Bewegung der Drückrolle ermittelt und ebenfalls digital aufgezeichnet.

Während ein Handdrücker eine optimale Überlaufart ermittelt, werden die Daten dieses Überlaufes bzw. dieses Verformungsvorganges in der Speicher- und Rechnereinheit gespeichert, wobei die so ermittelten Werte dann den Lagesollwert darstellen. Bei den nun folgenden numerisch gesteuerten Überläufen bzw. Verformungsvorgängen werden die Sollwerte aus der Speicher- und Rechnereinheit abgerufen und bilden das Programm für die Bewegung der Drückrolle. Eine Sicherheitskurve, die der Kurve des verwendeten Futters entspricht, gibt die äußerste Grenze für die Drückrollenbewegung, so daß auch beim Auftreten von Störungen eine Zerstörung oder Beschädigung von Maschinenteilen ausgeschlossen ist.

Zusätzlich zu der Steuerung der Bewegungsbahn werden auch die während des Handdrückvorganges eingestellten Druckistwerte ermittelt und gespeichert und dienen während der numerisch gesteuerten Überläufe zur Bestimmung der Sollwerte, d.h. es wird wie bei dem Handdrücker nicht nur eine Steuerung der Bewegungskurve, sondern auch eine Steuerung über die Umformkraft vorgenommen. Dabei kann vorteilhaft der Höchstdruck begrenzt werden, so daß ebenfalls bei Störungen eine Beschädigung von Maschinenteilen auch damit ausgeschlossen werden kann.

Mit dem erfindungsgemäßen Drückverfahren bzw. der erfindungsgemäßen Drückmaschine ist es erstmals möglich, daß auch ohne den Einsatz von erfahrenen Handdrückern für die Durchführung der Fertigung qualitativ hochwertige Werkstücke in gleichbleibender Qualität gefertigt werden, wobei der Einsatz besonderer Fachleute für die Herstellung eines Programms nicht mehr notwendig ist. Vielmehr kann jetzt in einem Betrieb ein erfahrener Handdrücker die Programme sozusagen aus der Praxis heraus ermitteln und diese können dann von ungeschulten Kräften in der beschriebenen Weise eingesetzt werden.

**Patentansprüche**

1. Verfahren zum Betreiben einer numerisch kontrollierten und gesteuerten Drückmaschine mit mindestens einer von einem Support (7) getragenen Drückrolle (6), die quer zur Supportbahn bewegbar ist, wobei ein oder mehrere aufeinanderfolgende Rollenüberläufe der Drückrolle von einem Drücker gesteuert vorgenommen werden und der Weg der Drückrolle (Istwerte) gemessen wird, wobei eine Referenzkurve für einen automatischen Wiederholbetrieb gespeichert wird und bei automatischer Bearbeitung gleicher Werkstücke über einen Rechner mit Daten-Speicher die Drückrolle mit Hilfe der Referenzkurve gesteuert wird, dadurch gekennzeichnet, daß die Lageistwerte und die zugehörigen Druck- bzw. Kraftwerte zur Bestimmung von Lagesollwerten gemessen werden, die ihrerseits für den automatischen Wiederholbetrieb in Form der Referenzkurve gespeichert werden, wobei diese Messungen während eines oder mehrerer durch den Drücker kraftgesteuerten Überlaufs oder Überläufe erfolgt und daß zusätzlich eine die Drückrollenbewegung begrenzende Sicherheitskurve gespeichert wird, die der Kontur des verwendeten Drückfutters (2) entspricht.

2. Verfahren nach Anspruch 1, dadurch gekennzeichnet, daß die Bewegung der Drückrolle gegenüber dem Support hydraulisch erfolgt und Istwertgeber zur Lagefeststellung des Supports und der Drückrolle vorhanden sind, deren Werte in Abhängigkeit von der Lage der Drückrolle gemessen und gespeichert werden.

3. Verfahren nach Anspruch 2, dadurch gekennzeichnet, daß während des durch den Drücker gesteuerten Überlaufs der Druck der Hydraulikflüssigkeit bestimmt wird, der in der die Drückrolle in Richtung quer zur Supportbahn bewegenden Kolben-Zylinder-Einheit herrscht.

4. Verfahren nach Anspruch 3, dadurch gekennzeichnet, daß die gemessenen Druckwerte mit einem Druckgrenzwert verglichen werden, der einen nicht zu überschreitenden Sicherheitswert darstellt.

5. Verfahren nach einem der vorhergehenden Ansprüche, dadurch gekennzeichnet, daß die Messungen, die Speicherung und die Steuerung digital erfolgen.

6. Verfahren nach einem der Ansprüche 1 bis 5, dadurch gekennzeichnet, daß gesteuert von der Speicher- und Rechnereinheit die reproduzierbare Geschwindigkeit der Drückrolle und des Supports bis zum mehrfachen Wert der Aufnahmegeschwindigkeit erhöht wird.

7. Verfahren nach einem der Ansprüche 1 bis 6, dadurch gekennzeichnet, daß die Rechner- und Speichereinheit nicht nur die Bewegung der Drückrolle und des Supports speichert und regelt, sondern alle Einzelfunktionen der Maschine die zur Herstellung eines Werkstückes erforderlich sind, einschließlich Unterbrechung des Drückvorganges.

8. Verfahren nach einem der Ansprüche 1 bis 7, dadurch gekennzeichnet, daß die Wege für den Rollenvorschub und die Drücke zur Erreichung dieses Vorschubes mittels beweglicher Handhebel durch den Handdrücker bestimmt werden

**0 062 685**

und daß der in den beiden für den Vorschub verantwortlichen Hydrauliksystemen wirksame Druck nach entsprechender Reduzierung auch auf den Handhebel einwirkt.

9. Drückmaschine mit einem rotierenden Drückfutter und mindestens einer Drückrolle (6), mit einem Kreuzsupport (7), bei dem eine Bewegung der Drückrolle in Richtung quer zur Bewegungsbahn des Supports vorgenommen wird, Lageistwertgebern zur Bestimmung der Position der Drückrolle im Verhältnis zum Drückfutter und mit einer numerischen Steuerung zur Steuerung der Drückrollenbewegung aufgrund gespeicherter Daten, mit Vorrichtungen zur automatischen Wiedergabe (Playback) einer gespeicherten Referenzkurve, dadurch gekennzeichnet, daß Mittel vorhanden sind zur Messung der Lageistwerte und der zugehörigen Druck- bzw. Kraftwerte sowie mit Vorrichtungen zum Bestimmen der daraus abgeleiteten Lagesollwerte und zu deren Speicherung in Form einer Referenzkurve und einer die Drückrollenbewegung begrenzenden Sicherheitskurve, die der Kontur des verwendeten Drückfutters (2) entspricht.

10. Drückmaschine nach Anspruch 9, gekennzeichnet durch einen die Steuerung und Datenspeicherung mittels digitaler Signale vornehmenden Rechner.

11. Drückmaschine nach Anspruch 9 oder 10, gekennzeichnet, durch einen im Hydrauliksystem angeordneten Druckistwertfühler und einen von dem Rechner gesteuerten Druckbegrenzer im Hydrauliksystem.

12. Drückmaschine nach einem der Ansprüche 9 bis 11, dadurch gekennzeichnet, daß zur Bewegung des Supports eine Spindel vorhanden ist.

13. Drückmaschine nach einem der Ansprüche 9 bis 12, dadurch gekennzeichnet, daß ein hydrauliches System für die Bewegung des Supports in der Längsrichtung vorhanden ist, welches mindestens zwei im Hydrauliksystem angeordnete Druckwertfühler und eine von dem Rechner gesteuerte Druckbegrenzung aufweist.

14. Drückmaschine nach Anspruch 12, dadurch gekennzeichnet, daß auch zur Bewegung der Drückrolle gegenüber dem Support eine Spindel vorhanden ist und daß Antriebsmotore für die Spindeln des Supports und der Drückrolle vorliegen und daß eine Kraftmessung und Überwachung durch eine Messung bzw. Überwachung des Stroms oder Drehmoments vorgenommen wird oder eine Kraftmessung direkt erfolgt.

**Revendications**

1. Procédé de conduite d'une machine de repoussage commandée et contrôlée numériquement, avec au moins un galet de repoussage (6) qui est porté par un support (7) et peut être déplacé transversalement à la trajectoire de ce dernier, une ou plusieurs passes successives de ce galet étant commandées et exécutées par un repousseur, et le trajet du galet de repoussage étant mesuré (valeurs réelles), une courbe de référence pour une marche répétitive automatique étant mémorisée, et le galet de repoussage étant commandé, par un calculateur avec mémoire de données, à l'aide de la courbe de référence, lors de l'usinage de pièces identiques, caractérisé par le fait que les valeurs réelles de position et les valeurs de pression ou d'effort y afférentes sont mesurées pour déterminer les valeurs de consigne de position qui sont elles-mêmes mémorisées sous la forme de courbes de référence, pour la marche répétitive automatique, ces mesures s'effectuant au cours d'une ou plusieurs passes conduites par le repousseur, et par le fait qu'une courbe de sécurité, correspondant au contour du mandrin de repoussage utilisé (2), cette courbe limitant le mouvement de galet de repoussage, est en outre mémorisée.

2. Procédé selon la revendication 1, caractérisé par le fait que le mouvement du galet de repoussage en face du support s'effectue hydrauliquement, et par le fait que des capteurs de valeur réelle sont prévus pour la détermination de position du support et du galet de repoussage, les valeurs de ces capteurs étant mesurées et mémorisées en fonction de la position du galet de repoussage.

3. Procédé selon la revendication 2, caractérisé par le fait qu'au cours de la passe commandée par le repousseur, on détermine la pression de fluide hydraulique régnant dans l'ensemble piston-cylindre déplaçant le galet de repoussage dans une direction transversale à la trajectoire du support.

4. Procédé selon la revendication 3, caractérisé par le fait que les valeurs de pression mesurées sont comparées à une valeur-limite de pression qui représente une valeur de sécurité à ne pas dépasser.

5. Procédé selon l'une des revendications précédentes, caractérisé par le fait que les mesures, la mémorisation et la commande sont effectuées numériquement.

6. Procédé selon l'une des revendications 1 à 5, caractérisé par le fait que la vitesse reproductible du galet de repoussage et du support est accrue jusqu'à une valeur multiple de la vitesse à l'enregistrement, cela sous la commande de l'unité de mémoire et calcul.

7. Procédé selon l'une des revendicatiosn 1 à 6, caractérisé par le fait que l'unité de mémoire et calcul mémorise et régit non seulement le mouvement du galet de repoussage et du support mais aussi toutes les fonctions individuelles de la machine qui sont nécessaires à l'élaboration d'une pièce, y compris l'interruption du processus de repoussage.

8. Procédé selon l'une des revendications 1 à 7, caractérisé par le fait que les trajets pour l'avance du galet et les pressions pour obtenir cette avance sont déterminés, au moyen de leviers à main mobiles, par le repousseur opérant manuellement, et par le fait que la pression effective dans les deux systèmes hydrauliques responsables de l'avance agit aussi sur le levier à main, après une réduction appropriée.

9. Machine de repoussage, comportant un mandrin de repoussage rotatif et au moins un galet de repoussage (6), un support transversal (7) avec lequel un mouvement du galet de repoussage est effectué dans une direction transversale à la trajectoire du support, des capteurs de valeur réelle de position, pour déterminer la position du galet de repoussage par rapport au mandrin de repoussage, et une commande numérique pour commander le mouvement du galet de repoussage, sur la base de données mémorisées, avec des dispositifs de restitution automatique d'une courbe de référence mémorisée, caractérisée par le fait qu'il y a des moyens de mesure des valeurs rélles de position et des valeurs de pression ou d'effort correspondantes, ainsi que des dispositifs pour déterminer les valeurs de consigne de position qui en dérivant, et pour les mémoriser sous la forme d'une courbe de référence et d'une courbe de sécurité limitant le mouvement du galet de repoussage et correspondant au contour du mandrin de repoussage utilisé (2).

10. Machine de repoussage selon la revendication 9, caractérisée par un calculateur effectuant la commande et la mémorisation de données au moyen de signaux numériques.

11. Machine de repoussage selon la revendication 9 ou 10, caractérisée par un capteur de valeur réelle de pression agencé dans le système hydraulique, et par un limiteur de pression dans le système hydraulique, commandé par le calculateur.

12. Machine de repoussage selon l'une des revendications 9 à 11, caractérisée par le fait qu'il y a une broche pour le mouvement du support.

13. Machine de repoussage selon l'une des revendications 9 à 12, caractérisée par le fait qu'il y a, pour le mouvement du support dans la direction longitudinale, un système hydraulique présentant au moins deux capteurs de valeur de pression agencés dans le système hydraulique et une limitation de pression commandée par le calculateur.

14. Machine de repoussage selon la revendication 12, caractérisée par le fait qu'il y a aussi une broche pour le mouvement du galet de repoussage en face du support, et par le fait qu'il y a des moteurs d'entraînement pour les broches du support et du galet de repoussage, et par le fait qu'une mesure d'effort et une surveillance sont effectuées respectivement par une mesure et une surveillance du courant ou du couple, ou qu'une mesure d'effort est effectuée directement.

**Claims**

1. Method of operating a numerically supervised and controlled spinning machine comprising at least one spinning roller (6) supported by a slide (7) and being adapted to be moved transversely of the slide's path of travel, wherein one or more successive roller passes of the spinning roller are performed in controlled manner by a pusher and the distance of travel of the spinning roller (actual values) is detected, wherein a reference curve for an automatic repeat operation is stored and in the automatic processing of identical workpieces the spinning roller is controlled by a computer including a data memory, with the aid of the reference curve, characterized in that the positional actual values and the related pressure or power values are detected for determining positional set point values which, in turn are stored in the form of the reference curve for the automatic repeat operation, wherein these detections take place during one pass or more passes under power control by the pusher, and that additionally a safety curve limiting the spinning roller movement is stored, which corresponds to the contour of the spinning chuck (2) employed.

2. The method according to claim 1, characterized in that the spinning roller is moved or displaced relative to the slide by hydraulic means, and setpoint value generators for determining the positions of slide and spinning roller are provided, with the values of said generators being detected and stored in response to the position of the spinning roller.

3. The method according to claim 2, characterized in that during the pass under the control of the pusher, the pressure of the hydraulic liquid is detected which exists within the piston-cylinder unit for moving the spinning roller in a direction transversely of the path of travel of the slide.

4. The method according to claim 3, characterized in that the detected or measured pressure values are compared with a pressure limit value representing a safety value that must not be exceeded.

5. The method according to any one of the preceding claims, characterized in that the detections, the storage and control are performed in digital fashion.

6. The method according to any one of claims 1 to 5, characterized in that the reproducible rate of speed of the spinning roller and of the slide is increased up to a multiple of the value of the recording speed under the control of the memory and computer unit.

7. The method according to any one of claims 1 to 6, characterized in that the computer and memory unit stores and controls not only the movement of the spinning roller and of the slide, but also all of the individual functions of the machine required to produce a workpiece, including an interruption of the spinning process.

8. The method according to any one of claims 1 to 7, characterized in that the distances for roller feed and the pressures for effecting such feed are determined by means of movable hand levers by the manual pusher, and that the effective pressure existing within the two hydraulic systems which are responsible for the feeding operation), also acts upon the hand lever upon corresponding reduction of this pressure.

9. A spinning machine comprising a rotating spinning chuck and at least one spinning roller (6) including a cross slide (7) in which movement of the spinning roller takes place in a direction transversely of the path of travel of the slide, further comprising positional actual value generators for determining the position of the spinning roller in relation to the spinning chuck, and numerical control means for controlling the spinning roller movement on the basis of memorized data, including devices for automatic reproduction of a memorized reference curve, characterized by means for measuring or detecting the positional actual values and the related pressure or power values, as well as devices for determining the positional setpoint values derived herefrom, and for memorizing these setpoint values in the form of a reference curve and a safety curve limiting the spinning roller movement, which safety curve corresponds to the contour of the spinning chuck (2) employed.

10. The spinning machine according to claim 9, characterized by a computer performing control and data memorizing actions by means of digital signals.

11. The spinning machine according to claims 9 or 10, characterized by a pressure setpoint value sensor positioned in the hydraulic system and a pressure limiter controlled by the computer and provided in the hydraulic system.

12. The spinning machine according to any one of claims 9 to 11, characterized in that a spindle is provided for moving the slide.

13. The spinning machine according to any one of claims 9 to 12, characterized by a hydraulic system for the movement or displacement of the slide in the longitudinal direction thereof, which system includes at least a pair of pressure value sensors disposed in the hydraulic system and pressure limiting means controlled by the computer.

14. The spinning machine according to claim 12, characterized in that a further spindle is provided for moving the spinning roller relative to the slide, and that drive motors are provided for the spindles of the slide and of the spinning roller, and that force or power detection and monitoring are adapted to be performed by measuring or monitoring, respectively, the electric current or the torque, or power detection is adapted to be performed directly.